Europäisches Patentamt

European Patent Office

Office européen des brevets

(19)

(11) Numéro de publication: **0 031 765**
**A1**

## (12) DEMANDE DE BREVET EUROPEEN

(21) Numéro de dépôt: **80401820.8**

(22) Date de dépôt: **18.12.80**

(51) Int. Cl.³: **F 16 H 31/00**, G 21 C 7/14

(30) Priorité: **21.12.79 FR 7931398**

(43) Date de publication de la demande: **08.07.81**
**Bulletin 81/27**

(84) Etats contractants désignés: **BE DE GB**

(71) Demandeur: **Framatome, Tour Fiat 1 place de la Coupole, F-92400 Courbevoie (FR)**

(72) Inventeur: **Peletan, René, 10, rue Adam, F-94210 La Varenne Saint Hilaire (FR)**

(74) Mandataire: **Dupuy, Louis et al, CREUSOT-LOIRE 15 rue Pasquier, F-75383 Paris Cedex 8 (FR)**

(54) **Perfectionnement aux dispositifs à mouvement linéaire.**

(57) Perfectionnement aux vérins magnétiques à cliquets destinés au positionnement des barres de réglage d'un réacteur nucléaire.

Conformément à l'invention, les cliquets (2) de levage et/ou de maintien de la tige de commande (1) sont munis d'au moins deux dents (4) séparées d'une distance égale à celle séparant deux cannelures successives (3) de la tige (1).

EP 0 031 765 A1

"Perfectionnement aux dispositifs à mouvement linéaire"

La présente invention se rapporte aux dispositifs à mouvement linéaire, tels que les vérins électromagnétiques à cliquets destinés au positionnement des grappes de barres de réglage d'un réacteur nucléaire.

De tels dispositifs sont bien connus dans la technique et sont tels que par exemple décrits dans le brevet français n° 1.371.802 et le brevet belge n° 753.529. Dans ces appareils de type connu, la reprise de la charge est réalisée alternativement par deux ensembles de cliquets à denture simple qui s'engagent dans les cannelures d'une tige de commande. Le premier ensemble de cliquets (cliquets de transfert), mobile entre deux positions extrêmes, assure le transfert de la tige lorsqu'il est en engagement avec celle-ci. Le second ensemble (cliquets de maintien) assure le maintien de la tige lorsqu'elle n'est plus en engagement avec les cliquets de transfert (retour à leur position initiale). Avec de tels dispositifs, l'usure des dents des cliquets, ainsi que celle des cannelures de la tige de commande, est relativement importante. Cette usure est due essentiellement aux fortes pressions de contact qui apparaissent entre les dents des cliquets et les cannelures de la tige de commande.

Le dispositif de l'invention permet de réduire, de manière particulièrement simple et fiable, ces pressions de contact et par suite soit d'augmenter, pour des matériaux identiques, la durée de vie du mécanisme de levage, soit de permettre, pour une même durée de vie, l'utilisation d'un revêtement des dents de cliquet moins dur que celui utilisé actuellement. Il est caractérisé en ce qu'au moins un des cliquets comporte au moins deux dents d'engrènement séparées d'une distance égale à celle séparant deux cannelures

...∕...

successives de la tige de commande.

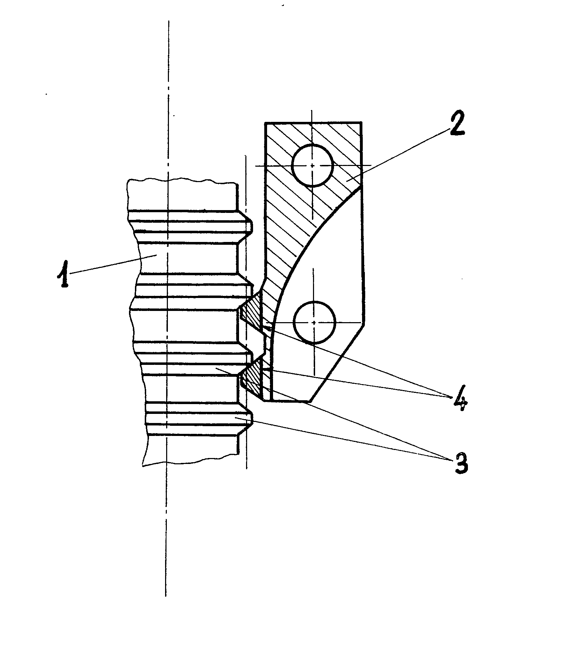

La figure unique annexée représente schématiquement un exemple de réalisation de l'invention, appliqué à un vérin électromagnétique à cliquets du type tel que décrit dans le brevet belge n° 753.529.

Sur la figure, la référence 1 désigne une tige de commande de barre de réglage de réacteur nucléaire et la référence 2 un des deux cliquets, soit de transfert, soit de maintien, destinés à provoquer, de manière classique, la montée ou la descente de la tige 1 sous commande des bobines de levage et d'abaissement lorsque ces cliquets sont engagés dans les cannelures annulaires 3 de la tige 1. Conformément à l'invention, le cliquet 2 comporte deux dents d'engrènement 4 séparées d'une distance égale à celle séparant deux cannelures successives 3 de la tige 1. Comme on le voit sur le dessin, la tige 1 est donc reprise par deux dents au lieu d'une seule comme c'était le cas pour le dispositif selon le brevet belge n° 753.529.

L'invention s'applique à la production d'énergie par réacteur nucléaire.

## REVENDICATION

Dispositif à mouvement linéaire du type comportant une tige de commande munie de cannelures et plusieurs cliquets destinés à s'engrener dans lesdites cannelures et à se déplacer avec ladite tige parallèlement à celle-ci, caractérisé en ce qu'au moins un desdits cliquets comporte au moins deux dents d'engrènement (4) séparées d'une distance égale à celle séparant deux cannelures successives (3) de la tige de commande (1).

## DOCUMENTS CONSIDERES COMME PERTINENTS

| Catégorie | Citation du document avec indication, en cas de besoin, des parties pertinentes | Revendication concernée |
|---|---|---|
| | GB - A - 910 203 (INDATOM) <br> * Page 3, lignes 88 et 89; figures 1,2 et 6 * | unique |
| A | BE - A - 679 074 (WESTINGHOUSE ELECTRIC COMPANY) <br> * En entier * | unique |
| AD | FR - A - 1 371 802 (WESTINGHOUSE ELECTRIC COMPANY) <br> * En entier * | unique |
| AD | BE - A - 753 529 (ACEC) <br> * En entier * | unique |
| A | US - A - 3 946 258 (LESHEM) <br> * En entier * | unique |
| A | US - A - 3 356 874 (CHIAPPARELLI) <br> * En entier * | unique |
| | ---- | |

**CLASSEMENT DE LA DEMANDE (Int. Cl. 3)**

F 16 H 31/00
G 21 C 7/14

**DOMAINES TECHNIQUES RECHERCHES (Int. Cl. 3)**

G 21 C
F 16 H

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 31-03-1981 | BEERNAERT |

OEB Form 1503.1 06.78